# EUROPEAN PATENT APPLICATION

(11) **EP 4 529 256 A1**
(43) Date of publication of application: **26.03.2025**
(21) Application number: 24202520.3
(22) Date of filing: 25.09.2024
(51) Int. Cl.: H04W 24/02, H04W 36/22, H04W 92/12

(54) **METHOD AND APPARATUS FOR ENCODING RAN PARAMETERS OVER E2 INTERFACE USING E2SM-RC FOR TRAFFIC STEERING-BASED SLA OPTIMIZATION UPON CELL SHUTDOWN FOR ENERGY SAVINGS ACTIVATION**

(30) Priority: 25.09.2023 US 202363584998 P; 20.09.2024 US 202418890920
(71) Applicant: Mavenir Systems, Inc., Richardson, TX 75081 (US)
(72) Inventor: SIVARAJ, Rajarajan, Plano, 75074 (US)
(74) Representative: Studio Torta S.p.A.

(57) **Abstract**

A method of implementing an optimal handover of a user equipment (UE) in an Open Radio Access Network (O-RAN) system from a first serving cell subject to a shutdown to an optimal target cell for the UE before executing the shutdown includes: providing an event trigger style for an event trigger used to trigger an event in an E2 node of the O-RAN system when a configuration change is ongoing within the E2 node, wherein the event trigger style is provided as radio intelligent controller (RIC) Event Trigger Definition information element (IE) Style Type 5; sending the event trigger from the E2 node to a near-real time (near-RT) RIC; and sending, by the near-RT RIC, a control message to the E2 node to implement the optimal handover of the UE to the optimal target cell for the UE.

## Description

### BACKGROUND OF THE DISCLOSURE

### 1. Field of the Disclosure

The present disclosure relates to cellular telecommunication systems, and relates more particularly to Open Radio Access Network (O-RAN) systems and energy savings and Service Level Assurance (SLA) in such cellular telecommunication systems.

### 2. Description of the Related Art

To improve the energy efficiency of an O-RAN telecommunication system, the state-of-art systems employ techniques that activate the energy savings mode of one or more cells with poor Energy Efficiency (EE) KPI, given by the ratio of total successfully transmitted data volume from the cell to the energy spent, via cell shutdown. However, the current Service Level Assurance (SLA) mechanisms to provide seamless coverage and service to User Equipment (UE) impacted by the cell shutdown are based on static policies (e.g., largely based on the quality of service (QoS) index of the subscribed traffic, the target cell priority based on the frequency band information, and/or pre-defined load thresholds, etc.). Moreover, the conflicting objectives between improving the Energy Efficiency KPI, coverage hole minimization and SLA of UEs (especially premium subscribers) require decision making at the UE level individually for those UEs that would be impacted by cell shutdown of those cells with poor EE KPI values, serving the UEs.

The current SLA mechanisms do not account for, or adapt with, the dynamics of the wireless environment and heterogeneous nature of the UEs in terms of their individual RF channel patterns, subscribed traffic and slice patterns, load and buffer size patterns - which differ from each other. Conventional mechanisms to achieve SLAs for UEs in cells being subject to cell shutdown are driven by static policies and do not account for individual per-UE RAN characteristics, which conventional mechanisms are typically handled as follows:
1) Static policy to handover the UEs based on their QoS class index (QCI/5QI of user-plane traffic) to cells based on their frequency band (such as low-band or mid-band or ARFCN).
2) Static policies restricting which cells can be subject to cell shutdown, based on their ARFCN or frequency band information, etc.

Such static policies i) seldom account for real-time radio dynamics and traffic conditions, and ii) are limited in their ability to handle QoS adaptation towards meeting UE's SLAs. Hence, these static policies are configured only via the Management-plane (M-plane) configuration management interface - that manages configuration and policy parameters for the individual cells and network functions. The M-plane configuration management interface invariably treats all UEs alike without accounting for the heterogeneity among UEs, unlike the UE-level C-plane and U-plane control interface such as the O-RAN E2 interface, which handles control-plane decision optimization at individual UE level granularities.

Therefore, a need exists to provide a solution that optimizes UE-level handover to the best UE-specific target cell for a group of UEs being served by the cell(s) subject to cell shutdown, before the cell shutdown configuration is processed.

### SUMMARY OF THE DISCLOSURE

The present disclosure provides a solution that leverages the capability of the O-RAN E2 interface and enhances the current O-RAN WG3-defined E2 Service model for RAN Control (E2SM-RC) to facilitate UE-level handover to its best UE-specific target cell for a group of UEs being served by the cell(s) subject to cell shutdown, before the cell shutdown configuration is processed.

In an example embodiment according to the present disclosure, a mechanism is provided for enhancing the current O-RAN WG3-defined E2 Service Model for RAN Control (E2SM-RC) to facilitate UE-level traffic steering based on observability of individual UE-level parameters, metrics and state information for all the UEs being served by the cells subject to cell shutdown (thereby, impacting them), thereby optimally handing them over to the best UE-specific target cells (which likely vary from one UE to the other) while the NG-RAN node with the O-CU-CP function is processing an impending cell shutdown (that is triggered by either a centralized SON function or a distributed SON function or an internal sub-function).

In an example embodiment according to the present disclosure, a mechanism is provided for the individual UEs, being served by the cell(s) that are subject to shut down, to be gracefully handed over to their respective individual UE-specific target cells (e.g., based on per-UE observability), before executing the cell shutdown, so as to guarantee their SLAs, in terms of KPIs such as call-drop KPI (critical for VoNR traffic), packet delay KPI (critical for URLLC users), DRB throughput KPI (critical for eMBB users), etc.

In an example embodiment according to the present disclosure, a method of implementing an optimal handover of a user equipment (UE) in an Open Radio Access Network (O-RAN) system from a first serving cell subject to a shutdown to an optimal target cell for the UE before executing the shutdown includes: providing an event trigger style for an event trigger used to trigger an event in an E2 node of the O-RAN system when a configuration change is ongoing within the E2 node, wherein the event trigger style is provided as radio intelligent controller (RIC) Event Trigger Definition information element (IE) Style Type 5; sending the event trigger from the E2 node to a near-real time (near-RT) RIC; and sending, by the near-RT RIC, a control message to the E2 node to implement the optimal handover of the UE to the optimal target cell for the UE.

An example embodiment of a method further includes: providing, by the E2 node of the O-RAN system, at least one of performance measurement data, trace data, and configuration management data to a non-real time (non-RT) RIC; and sending, by the non-RT RIC to the E2 node of the O-RAN system, a cell shutdown message containing information regarding the first serving cell to be shut down.

An example embodiment of a method further includes: sending, by the near-RT RIC to the E2 node, an E2 CONTROL message to handover the UE from the first serving cell to the optimal target cell; and sending, by the E2 node to the near-RT RIC, an E2 CONTROL acknowledgement (ACK) message in response to the E2 CONTROL message.

In an example embodiment of a method, RIC Event Trigger Definition IE Style type 5 is used to detect a configuration process in the E2 node based on a specific configuration process type identifier and a configuration process breakpoint identifier associated with the configuration.

In an example embodiment of a method, the configuration process type identifier comprises an identifier for E2 node cell state update process type; and the configuration process breakpoint identifier comprises an identifier for cell shutdown within the E2 node, and/or an identifier for cell resumption within the E2 node.

### BRIEF DESCRIPTION OF THE DRAWINGS

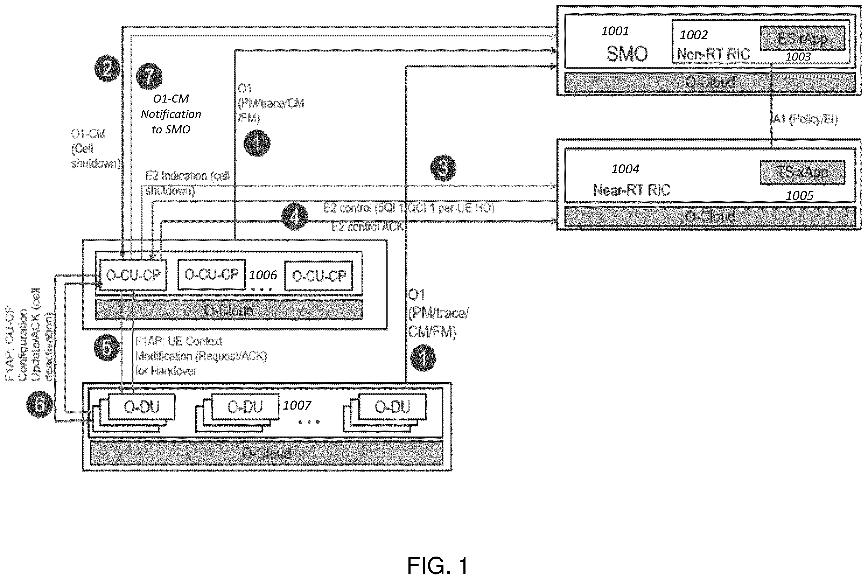

FIG. 1 illustrates an example of executing UE-level traffic steering for a group of UEs simultaneously upon an impending cell shutdown.

### DETAILED DESCRIPTION

In an example embodiment according to the present disclosure, a new event trigger style is provided in O-RAN WG3-defined E2SM-RC called "E2 node Configuration process breakpoint". This style is used to trigger an event in an E2 node (e.g., NG-RAN O-CU-CP Function) when a configuration change is ongoing within the E2 node, that is handled by breakpoints within the E2 node function dealing with configuration process. This is similar to the existing O-RAN WG3-defined "Call process breakpoint" event trigger style that is used to trigger an event in the E2 node during an ongoing UE-level call process change within the E2 node, that is handled by breakpoints within the E2 node function dealing with UE-level call process. The key difference is that the proposed new implementation in the event trigger pertains to an ongoing configuration process change or update, unlike an ongoing UE-level call process change that is handled by the "Call Process Breakpoint" event trigger. With reference to O-RAN WG3 E2SM-RC specification Section 7.3.1, in the present disclosure, the new proposed E2 Node Configuration process breakpoint is added to this table (TABLE 1 shown below) as RIC Style Type with index 5 (as shown below in *underlined italics,* whereas the rest of the RIC Style Types from indices 1 - 4 are in the current O-RAN WG3 E2SM-RC baseline specification).

**TABLE 1**

| **RIC Style Type** | **Style Name** | **Supported RIC Service Style** | | | **Style Description** |
|---|---|---|---|---|---|
| | | **Report** | **Insert** | **Policy** | |
| 1 | Message Event | 1 | - | 1-7 | Triggering conditions are based on arrival or departure of network interface message or RRC message. |
| 2 | Call Process Breakpoint | 2 | 1-7 | 1-8 | Triggering conditions are based on call process breakpoint. |
| 3 | E2 Node Information Change | 3 | - | - | Triggering conditions are based on change of E2 Node or cell related configuration information. |
| 4 | UE Information Change | 4 | - | 9 | Triggering conditions are based on change of UE Information. |
| 5 | *E2 Node Configuration Process Breakpoint* | 3 | *3, 7 and 255* | 8 | *Triggering conditions are based on the breakpoint in the E2 node related to E2 node configuration processes.* |

The proposed *RIC Event Trigger Definition IE* style (i.e., *RIC Style type* 5) is used to detect a configuration process in the E2 Node based on a specific configuration process type identifier and a configuration process breakpoint identifier, associated with the E2 node configuration. The E2 node configuration process type and breakpoint configured for event triggering can also be conditioned to be associated with a certain E2 Node-related information. The proposed *RIC Style Type 5* differs from *RIC Style Type* 3 in that it triggers a RIC event when there is an ongoing configuration process associated with an E2 node that may result in a potential change in the E2 node configuration upon the outcome of the process, whereas *RIC Style Type 3* deals with an RIC event upon the change of E2 node information state (including configuration state).

The following table (TABLE 2) specifies the supported configuration process types, configuration process breakpoints, the associated RAN Parameters for possible E2 Node related conditioning for event triggering, as well as the supported INSERT, REPORT and/or POLICY services, for the *E2 Node Configuration process breakpoint.* According to an example embodiment, the following types or categories of the E2 Node Configuration process breakpoints are enumerated:

**TABLE 2**

| **Configur ation Process Type ID** | **Configur ation Process Type** | **Configu ration Breakpoint ID** | **Configur ation Breakpo int Name** | **Associate d RAN Paramete rs** | **Support ed INSERT Service Styles** | **Support ed POLICY Service Styles** | **Support ed REPORT Service Styles** | **Description** |
|---|---|---|---|---|---|---|---|---|
| 1 | E2 node cell state update | 1 | Cell shutdow n or deactivati on within E2 node | C.2 | 3, 7 and 255 | 8 | 3 | This event applies when a configuration process running in the E2 node is about to shut down or deactivate a cell, or resume/reactivate a cell to normal operation. See, e.g., 3GPP TS 38.470 Sec 5.2.1 and TS 38.300 |
| | | 2 | Cell resumpti on or re-activation within E2 node | C.2 | | | | |

For the *E2 node cell state update* configuration type (Type 1), there are sub-category breakpoints, namely Configuration Process Breakpoint ID 1 - which triggers the configuration process event upon cell shutdown or cell deactivation (i.e., ES activation) of any cell within the E2 node, and Configuration Process Breakpoint ID 2 - which triggers the configuration process event upon cell resumption or re-activation (i.e., ES deactivation) of any currently de-activated cell within the E2 node.

RAN Parameters for E2 Node Configuration process breakpoint - E2 node cell state update: For the E2 node cell state update event to be triggered for any cell being subject to cell shutdown or resumption, the following sets of RAN parameters can used for defining filter conditions based on the O-RAN WG3 E2SM-RC generic encoding conventions.

1. Cell shutdown or deactivation: This configuration process breakpoint is associated with a configuration process in the E2 node that pertains to shutting down or de-activating one or more serving cells within the E2 node, as summarized in TABLE 3 below:

**TABLE 3**

| **RAN Parameter ID** | **RAN Parameter** | | | | | **RAN Parameter Value Type** | **Key Flag** | **RAN Parameter Definition** | **Semantics Description** |
|---|---|---|---|---|---|---|---|---|---|
| 1 | **Information on list of cells being subject to shut down** | | | | | LIST | | | A Subset of *List of Served Cells* IE in TS 38.423. Can refer to one or more cells being served bv a given E2 node |
| 2 | **>Cell Information Item IEs** | | | | | STRUCTURE | | | |
| 3 | | | | >>NR Cell | | STRUCTURE | | O-RAN WG3 E2SM-RC Section 8.1.1.1 | |
| 4 | | | | >>Cell Measurements | | STRUCTURE | | | *NRCellDU* and *NRCellCU* MOC measurements in TS 28.552 |
| 5 | | | | | >>>Radio Resource Utilization | STRUCTURE | | O-RAN WG3 E2SM-RC Section *Radio Resource Utilization* IE in 8.1.1.14 | *Radio Resource Utilization* measurement family in TS 28.552 |
| 6 | | | | | >>>TB-related measurements | STRUCTURE | | O-RAN WG3 E2SM-RC Section *TB-related Measurements* IE in 8.1.1.14 | *TB-related measurements* PM family in TS 28.552 |
| 7 | | | | | >>>CQI-related measurements | STRUCTURE | | O-RAN WG3 E2SM-RC Section *CQI-related measurements* IE in TS 8.1.1.14 | *CQI-related measurements* PM family in TS 28.552 |
| 8 | | | >>>MCS-related measurements | | | STRUCTURE | | O-RAN WG3 E2SM-RC Section *MCS-related measurements* IE in TS 8.1.1.14 | *CQI-related measurements* PM family in TS 28.552 |
| 9 | | | >>>Number of active UE measurements | | | STRUCTURE | | O-RAN WG3 E2SM-RC Section *Number of active UE measurements* IE in TS 8.1.1.14 | *Number of active UEs* PM family in TS 28.552 |
| 10 | | | >>>Number of RRC-connected UEs | | | STRUCTURE | | O-RAN WG3 E2SM-RC Section *Number of RRC connections* IE in TS 8.1.1.12 | *RRC connection number* PM Family in TS 28.552 |
| 11 | | **>>List of neighbor NR cells** | | | | LIST | | | *Neighbor Information NR IE* in TS 38.423 |
| 12 | | | **>>>Neighbor NR Cell Item IEs** | | | STRUCTURE | | | |
| 13 | | | | >>>>Neighbor NR Cell | | STRUCTURE | | O-RAN WG3 E2SM-RC Section 8.1.1.1 | |
| 14 | | | | >>>>Cell Measurements | | STRUCTURE | | | *NRCellDU* and *NRCellCU* MOC measurements in TS 28.552 |
| 15 | | | | | >>>>>Radio Resource Utilization | STRUCTURE | | | *Radio Resource Utilization* measurement family in TS 28.552 |
| 16 | | | | | >>>>> TB-related measurements | STRUCTURE | | | *TB-related measurements* PM family in TS 28.552 |
| 17 | | | | | >>>>>CQI-related measurements | STRUCTURE | | | *CQI-related measurements* PM family in TS 28.552 |
| 18 | | | | | >>>>>MCS-related measurements | STRUCTURE | | | *CQI-related measurements* PM family in TS 28.552 |
| 19 | | | | | >>>>>Number of active UE measurements | STRUCTURE | | | *Number of active UEs* PM family in TS 28.552 |
| 20 | | | | | >>>>>Number of RRC-connected UEs | STRUCTURE | | | *RRC connection number* PM Family in TS 28.552 |

2. Cell resumption or activation: This configuration process breakpoint is associated with a configuration process in the E2 node that pertains to resumption or re-activation of one or more currently shut-down or deactivated cells within the E2 node, as summarized in TABLE 4 below:

**TABLE 4**

| **RAN Parameter ID** | **RAN Parameter** | | | | | **RAN Parameter Value Type** | **Key Flag** | **RAN Parameter Definition** | **Semantics Description** |
|---|---|---|---|---|---|---|---|---|---|
| **1** | **Information on list of NR Cells being resumed or reactivated** | | | | | **LIST** | | | A Subset of *List of Served Cells* IE in 3GPP TS 38.423. Can refer to one or more cells being served by a given E2 node |
| **2** | **>NR Cell Item IEs** | | | | | **STRUCTURE** | | | |
| 3 | | >>NR Cell | | | | STRUCTURE | | O-RAN WG3 E2SM-RC 8.1.1.1 | |
| 4 | | **>>List of neighbor NR cells** | | | | LIST | | | *Neighbor Information NR IE* in 3GPP TS 38.423 |
| 5 | | | **>>>Neighbor NR Cell Item IEs** | | | STRUCTURE | | | |
| 6 | | | | >>>>Neighbor NR Cell | | STRUCTURE | | O-RAN WG3 E2SM-RC 8.1.1.1 | |
| 7 | | | | >>>>Cell Measurements | | STRUCTURE | | | *NRCellDU* and *NRCellCU* MOC measurements in 3GPP TS 28.552 |
| 8 | | | | | >>>>>Radio Resource Utilization | STRUCTURE | | | *Radio Resource Utilization* measurement family in 3GPP TS 28.552 |
| 9 | | | | | >>>>>TB-related measurements | STRUCTURE | | | *TB-related measurements* PM family in 3GPP TS 28.552 |
| 10 | | | | | >>>>>CQI-related measurements | STRUCTURE | | | *CQI-related measurements* PM family in 3GPP TS 28.552 |
| 11 | | | | | >>>>>MCS-related measurements | STRUCTURE | | | *CQI-related measurements* PM family in 3GPP TS 28.552 |
| 12 | | | | | >>>>>Number of active UE measurements | STRUCTURE | | | *Number of active UEs* PM family in 3GPP TS 28.552 |
| 13 | | | | | >>>>>Number of RRC-connected UEs | STRUCTURE | | | *RRC connection number* PM Family in 3GPP TS 28.552 |

RAN Parameters for RIC Event Trigger Definition IE: From O-RAN WG3 E2SM-RC specification Section 9.2.1.1 *RIC Event Trigger Definition* IE, a new *E2SM-RC Event Trigger Definition Format,* i.e., *E2SM-RC Event Trigger Definition Format 6,* is added (as shown in TABLE 5 and TABLE 6 below in *underlined italics)* to reflect the newly defined E2 node Configuration process breakpoint introduced above.

**TABLE 5**

| **IE/Group Name** | | **Presence** | **Range** | **IE type and reference** | **Semantics description** |
|---|---|---|---|---|---|
| **CHOICE** *Event Trigger Format* | | M | | | |
| | >E2SM-RC Event Trigger Definition Format 1 | | | O-RAN WG3 E2SM-RC Section 9.2.1.1.1 | Used for O-RAN WG3 E2SM-RC Event Trigger Style 1 |
| | >E2SM-RC Event Trigger Definition Format 2 | | | O-RAN WG3 E2SM-RC Section 9.2.1.1.2 | Used for O-RAN WG3 E2SM-RC Event Trigger Style 2 |
| | >E2SM-RC Event Trigger Definition Format 3 | | | O-RAN WG3 E2SM-RC Section 9.2.1.1.3 | Used for O-RAN WG3 E2SM-RC Event Trigger Style 3 |
| | >E2SM-RC Event Trigger Definition Format 4 | | | O-RAN WG3 E2SM-RC Section 9.2.1.1.4 | Used for O-RAN WG3 E2SM-RC Event Trigger Style 4 |
| | >E2SM-RC Event Trigger Definition Format 5 | | | VOID (O-RAN WG3 E2SM-RC Section 9.2.1.1) | Format 5 has been deprecated |
| | *>E2SM-RC Event Trigger Definition Format 6* | | | *Refer to TABLE 6 below* | *New format, as part of the example embodiment* |

### 1. E2SM-RC Event Trigger Definition Format 6 IE: Configuration Process Breakpoint

**TABLE 6**

| ***IE*/*Group Name*** | ***Presence*** | ***Range*** | ***IE type and reference*** | ***Semantics description*** |
|---|---|---|---|---|
| *Configuration Process Type ID* | *M* | | *INTEGER (0..255)* | *To identify the configuration process type ID, based on the table defined in Section C.1* |
| *Configuration Breakpoint ID* | *M* | | *INTEGER (0..255)* | *To identify the confiquration breakpoint ID for the configuration process type ID, based on the table* *defined in Section C.1*/*C.2* |
| *Event Trigger Condition ID* | *M* | | *O-RAN WG3 E2SM-RC Section 9.3.21* | |
| *Associated E2 Node Info filters* | *O* | | *O-RAN WG3 E2SM-RC Section 9.3.29* | *Used to set optional E2 Node related information for event triggering.* |
| | | | | *RAN Parameters in Section C.2 shall only be used.* |

RIC Action Definition IE Format 4:

According to an example embodiment of the present disclosure, an enhancement to the *RIC Action Definition IE Format 4* IE defined in O-RAN WG3 E2SM-RC specification Section 9.2.1.2.4 is provided. Since the cell shutdown for Energy Savings activation would result in impacting a group of UEs, the action definition should be enhanced/modified to define which group of UEs should be bound to the RIC action performed by the E2 node to communicate with the Near-RT RIC over the E2 interface (using E2SM-RC service model) towards enabling the Near-RT RIC towards taking UE-level traffic steering or other RAN optimization control decision for each individual UE in the group towards meeting their SLAs and guaranteeing them continued coverage/service upon the impending cell shutdown event.

Towards this end, an example embodiment of the present disclosure provides the *UE Group Definition* IE (that defines grouping of UEs based on primary cell's Cell Global Identity (CGI) or absolute radio-frequency channel number (ARFCN), secondary cell CGI or ARFCN, QoS indices - QCI/5QI, Slice subnet instances Slice/Service type (SST) and/or Slice Differentiator (SD), RAN conditions, Allocation Retention Priority, etc.) in the *RIC Action Definition IE Format 4* so that the E2 node shall know which UEs shall be bound by the RIC Action, that follows the triggering of the E2 node configuration process breakpoint event, for correspondence/interfacing with the Near-RT RIC from the E2 node via E2AP, that further enables the Near-RT RIC to take per-UE control action for traffic steering of individual UEs before the cell shutdown is executed.

In addition, towards enabling the Near-RT RIC to make more optimal and informed UE-level decisions, an example embodiment of the present disclosure provides a modification of the *RIC Action Definition IE Format 4* to include *RAN Parameters for Context Information* IE that provides the Near-RT RIC with additional UE-specific and RAN contextual information. The reason for proposing this enhancement in *RIC Action Definition IE Format* 4 is because this action definition format deals with multiple insert indications from the E2 node to the Near-RT RIC that works well for executing UE-level handover for multiple UEs (more than 1), typical in the case of coverage hole mitigation and SLA guarantee requirements for a group of UEs that would be impacted by cell shutdown. The included additional IEs reflecting the modification in *RIC Action Definition IE Format 4* IE are highlighted below (in TABLE 7) in *underlined italics,* alongside the additional IEs that are present in the current O-RAN WG3 baseline E2SM-RC specification.

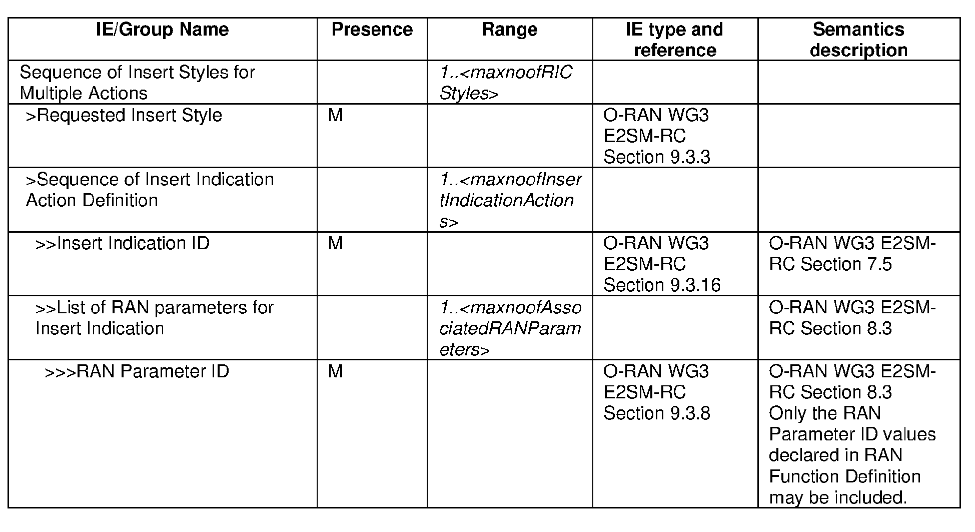

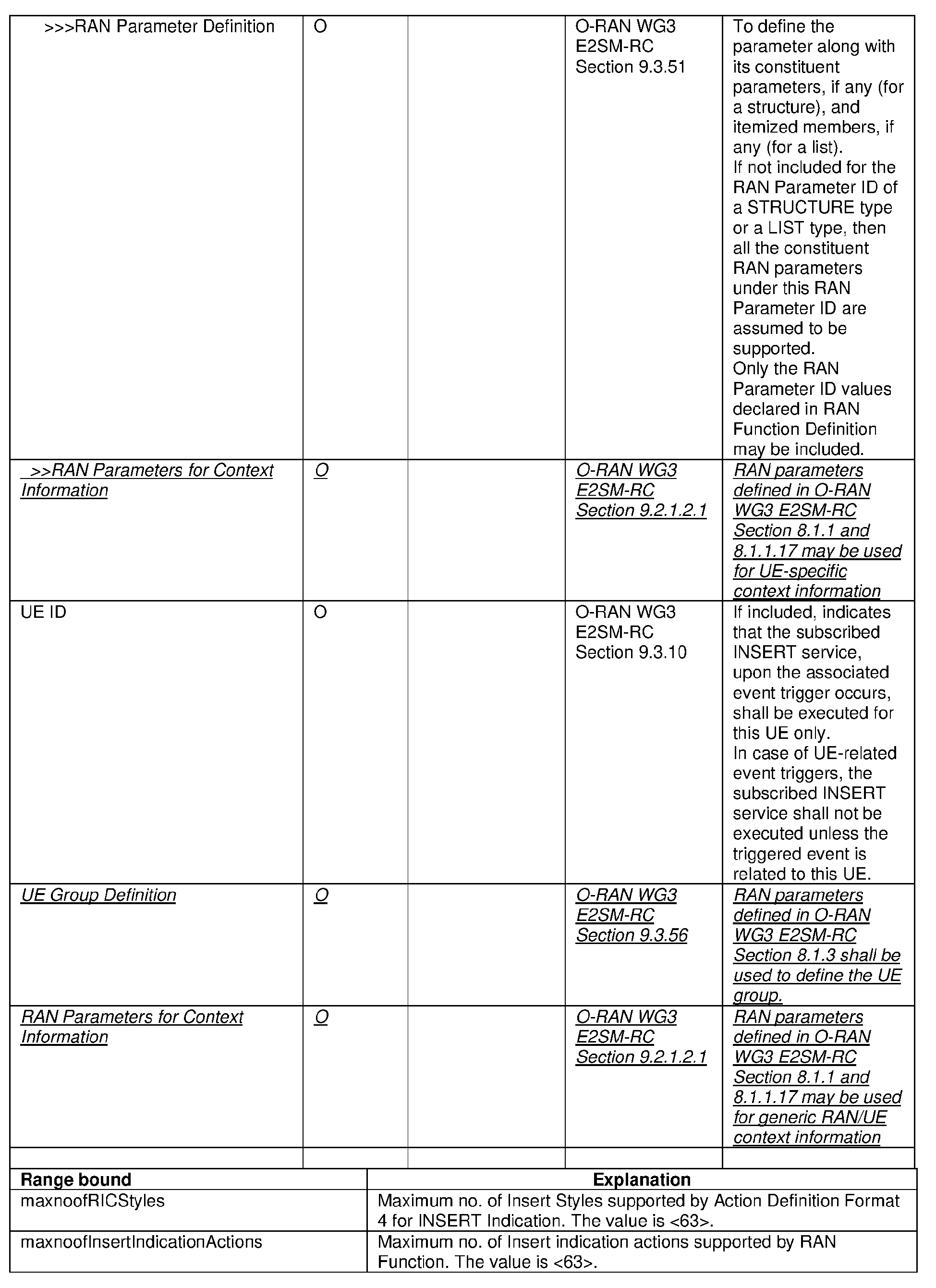

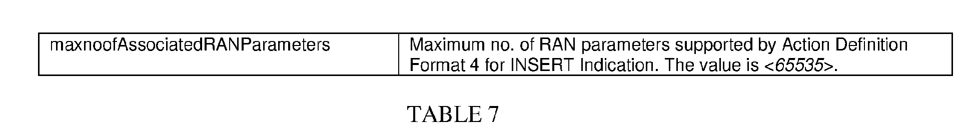

E2SM-RC Indication Message Format 6: An example embodiment of the present disclosure provides an enhancement to the *E2SM-RC Indication Message Format 6* IE defined in O-RAN WG3 E2SM-RC specification Section 9.2.1.4.6 (for enabling the E2 node to raise a request to the Near-RT RIC) by including the *UE ID* (UE Identifier) for each individual UE within the group of UEs that shall be subject to traffic steering handover action, before the cell shutdown is executed, along with the relevant contextual information for each UE, given by the *RAN parameters related to the UE Context* IE, and the contextual information pertaining to the event, given by the RAN parameters related to the event IE, so as to enable the Near-RT RIC to be informed with relevant UE-specific and network state information towards processing an optimal UE-specific handover control traffic steering decision for each individual UE in the group. When an E2 node encounters a cell shutdown/ES activation event for any of the cells that matches the event trigger condition for E2 Node Configuration process breakpoint along with the necessary filter parameters, the E2 node carries out the Insert Indication action that enables the E2 Node to request the Near-RT RIC about performing handover for individual UEs within the UE group, as defined/enhanced in the previous section regarding *RIC Action Definition IE Format 4* IE (which instructs how the E2 node shall act in terms of its interfacing with the Near-RT RIC or invoking RIC services, upon the triggering of the E2 Node Configuration process breakpoint event).

The reason for including this modification in *E2SM-RC Indication Message Format* 6 IE is because this format type deals with embedding or containing multiple requests within an embodied/consolidated request from the E2 node to the Near-RT RIC, as it deals with a simultaneous request for multiple UEs that shall be impacted by cell shutdown. Also, if the requested traffic steering control action involves different sets of RAN Parameters for different UEs, then the *UE ID* IE and *RAN Parameters related to UE Context* IE are contained within the *Sequence of Insert Indication Actions* IE, or if the requested traffic steering control action involves the same sets of RAN parameters for different UEs, then the *UE ID* IE and *RAN Parameters related to UE Context* IE are included in the *List of UE IDs* IE within the *Sequence of Insert Indication Actions* IE. The IEs highlighted below (in TABLE 8) in *underlined italics* represent the enhancements or modifications proposed in the invention on top of the existing IEs present in the O-RAN WG3 E2SM-RC specification.

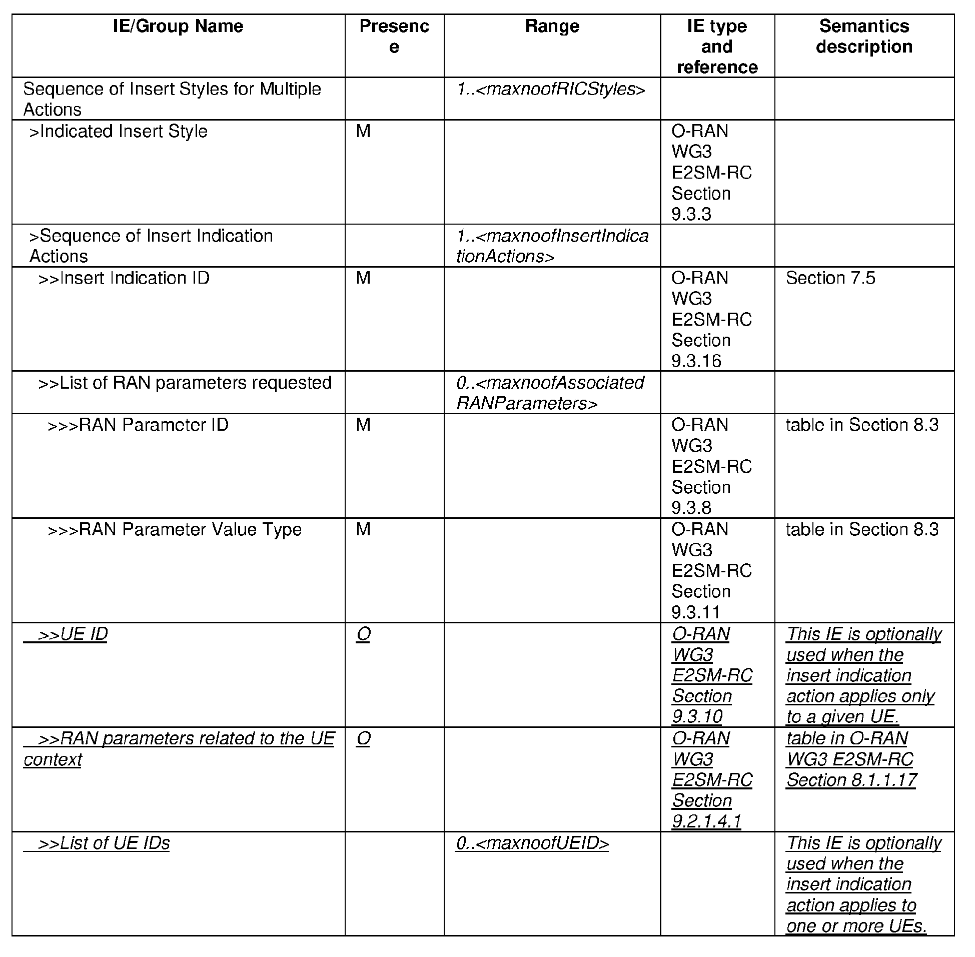

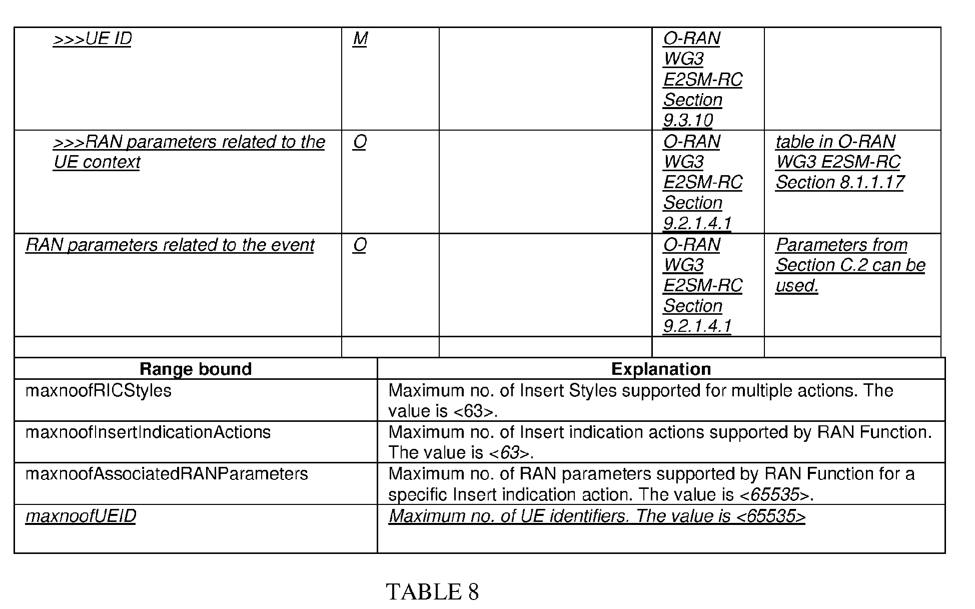

E2SM-RC Control Message Format 2: An example embodiment of the present disclosure provides an enhancement to the *E2SM-RC Control Outcome Format 2* IE defined in O-RAN WG3 E2SM-RC specification Section 9.2.1.8.2 (for enabling the E2 node to generate a control outcome back to the Near-RT RIC) by including the *UE ID* (UE Identifier) for each individual UE within the group of UEs that are subject to the control decision for traffic steering handover action by the Near-RT RIC to the E2 node. Due to the multiplicity of UEs involved, this modification is proposed for E2SM-RC Control Outcome Format 2 that deals with multiple control action outcomes. The newly included IEs are highlighted in *underlined italics* below in TABLE 9.

**TABLE 9**

| **IE/Group Name** | | | **Presence** | **Range** | **IE type and reference** | **Semantics description** |
|---|---|---|---|---|---|---|
| Sequence of Control Styles for Multiple Outcomes | | | | *1..<maxnoofRICStyl es>* | | |
| | >Indicated Control Style | | M | | O-RAN WG3 E2SM-RC Section 9.3.3 | |
| | >Sequence of Control Actions Outcome | | | *1..<maxnoofMulCtrl Actions>* | | |
| | | >>Control Action ID | M | | O-RAN WG3 E2SM-RC Section 9.3.6 | |
| | >>Sequence of RAN Parameters | | | *1.. <maxnoofRANQu tcomeParameters>* | | |
| | | >>>RAN Parameter ID | M | | O-RAN WG3 E2SM-RC Section 9.3.8 | |
| | | >>>RAN Parameter Value | M | | O-RAN WG3 E2SM-RC Section 9.3.14 | |
| | *>>UE ID* | | *O* | | *O-RAN WG3 E2SM-RC Section 9.3.10* | *This IE is optionally used when the control action outcome is for a given UE.* |
| | *>>List of UE IDs* | | | *0..<maxnoofUEID>* | | *This IE is optionally used when the control action outcome is applied for a set of UEs.* |
| | | *>>>UE ID* | *M* | | *O-RAN WG3 E2SM-RC Section 9.3.10* | |

| **Range bound** | | | | **Explanation** | | |
|---|---|---|---|---|---|---|
| maxnoofRICStyles | | | | Maximum no. of Control Styles supported by RAN Function. The value is <63>. | | |
| maxnoofMulCtrlActions | | | | Maximum no. of Control actions supported by RAN Function. The value is *<63>.* | | |
| maxnoofRANOutcomeParameters | | | | Maximum no. of RAN Parameters. Value is *<255>* | | |
| maxnoofUEID | | | | Maximum no. of UE identifiers. Value is *<65535>* | | |

RAN Function Definition for EVENT TRIGGER: An example embodiment of the present disclosure provides an enhancement to the *RAN Function Definition for EVENT TRIGGER Definition* IE defined in O-RAN WG3 E2SM-RC specification Section 9.2.2.2, as shown below, towards enabling the E2 node to declare its capability of handling E2 node configuration process breakpoint related events, the associated configuration process breakpoint types, the associated RAN parameters, etc., in the E2 SETUP REQUEST or RIC SERVICE UPDATE message that enables the Near-RT RIC to understand and know about the E2 node's capabilities for an efficient inter-operability, so that a relevant xApp in the Near-RT RIC shall be able to subscribe to events in the E2 node based on Configuration process events. The newly included IEs are highlighted in *underlined italics* below in TABLE 10.

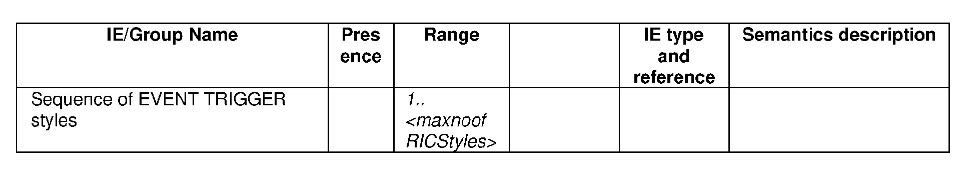

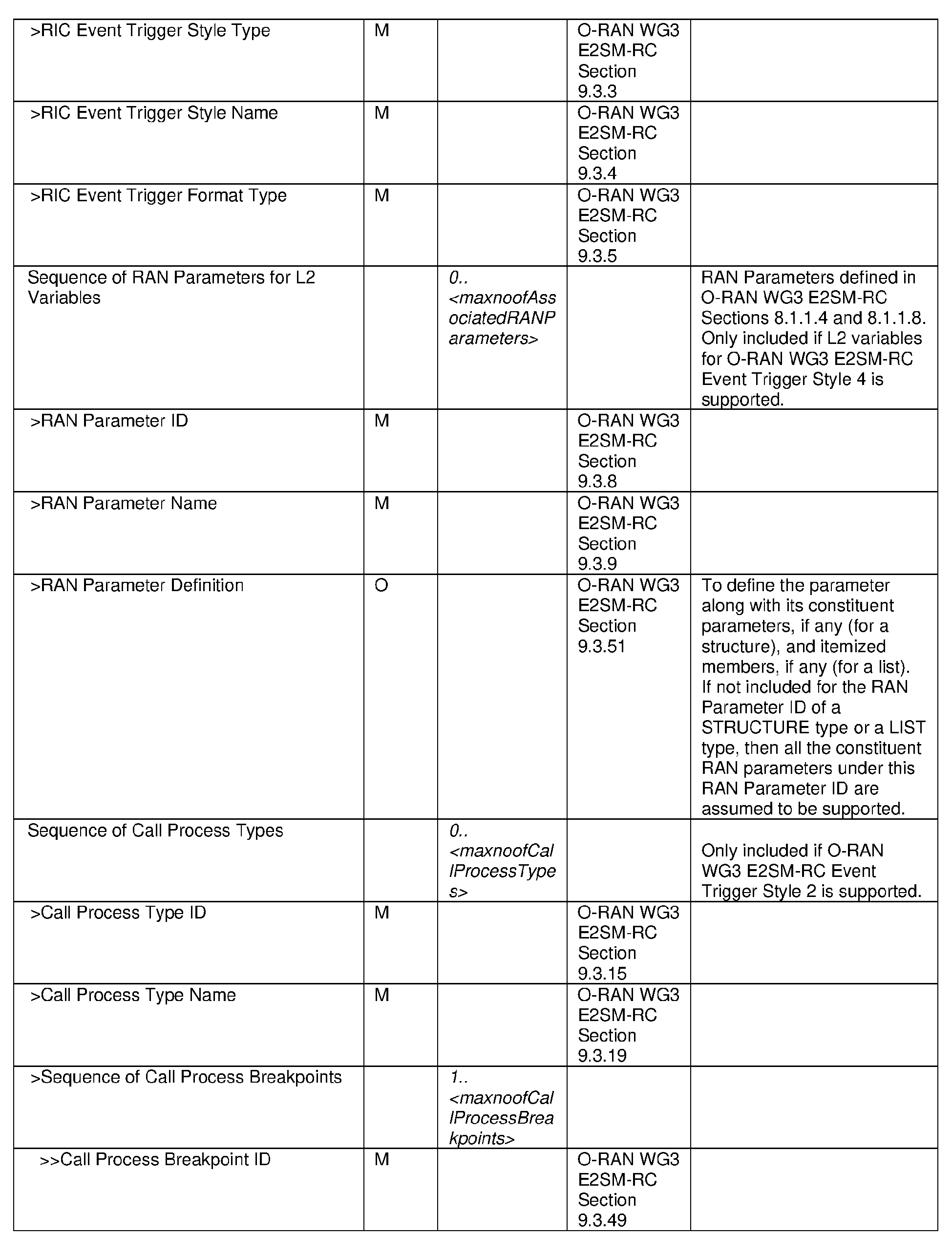

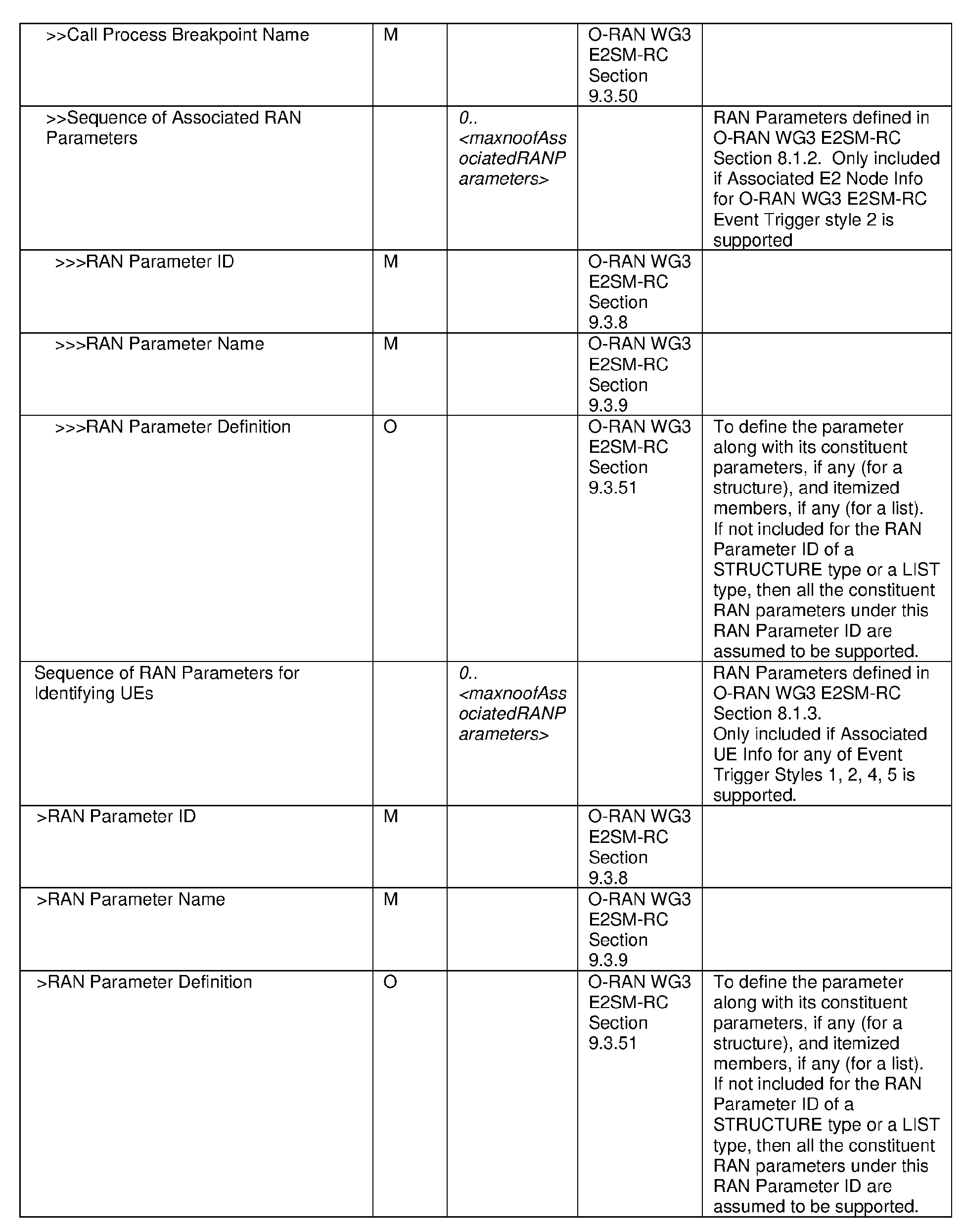

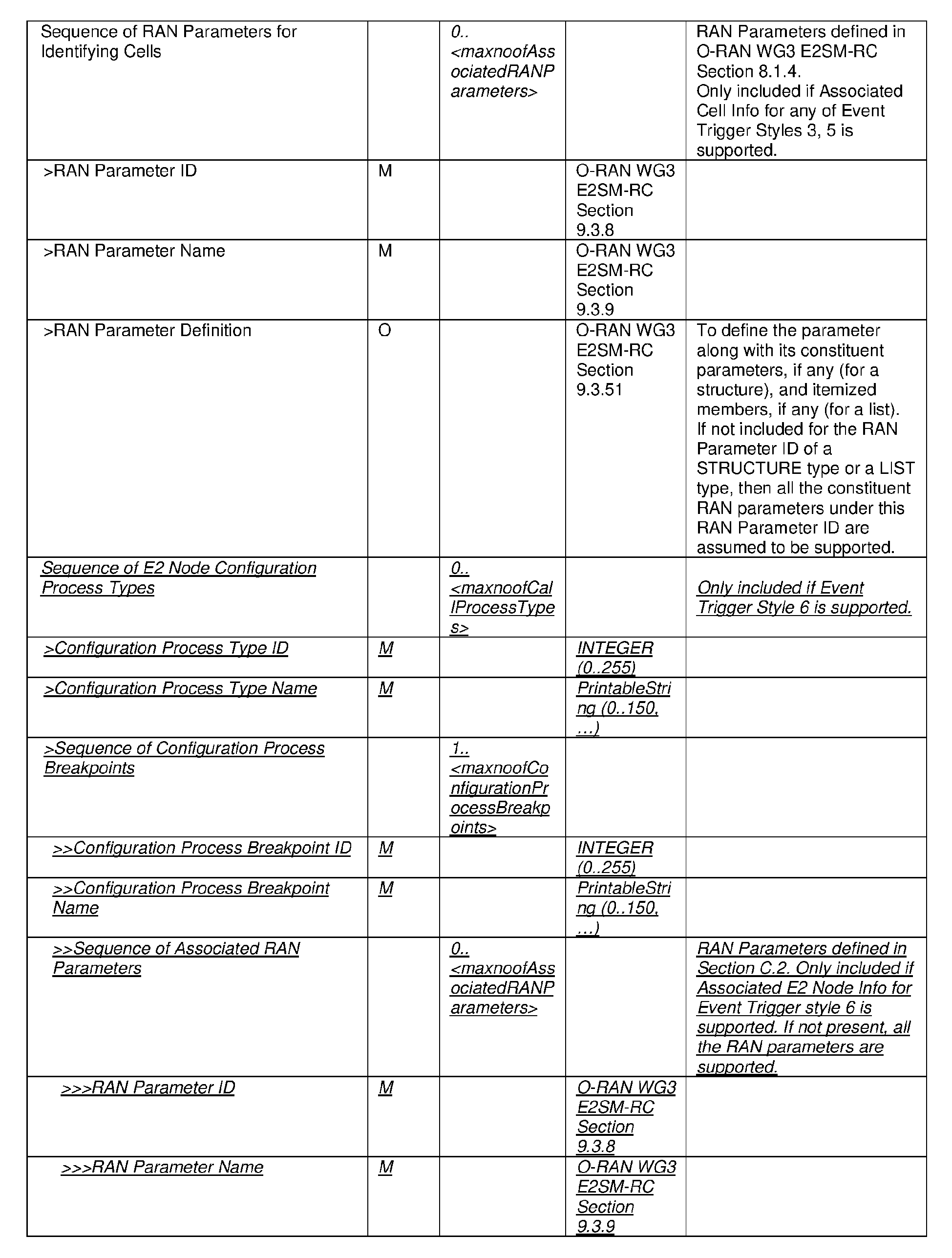

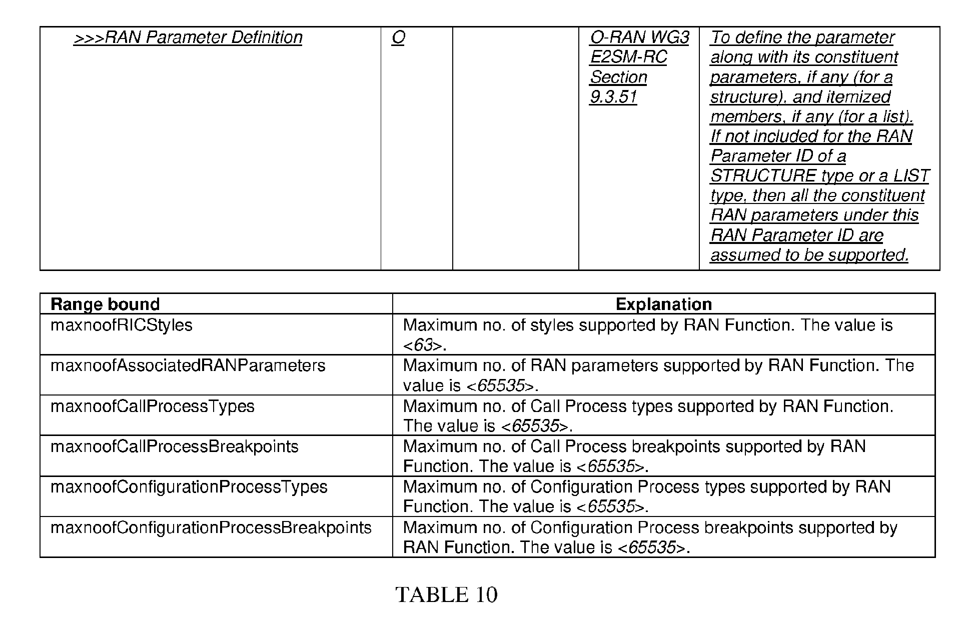

FIG. 1 illustrates an example of executing UE-level traffic steering for a group of UEs simultaneously upon an impending cell shutdown due to energy savings (ES) mode activation for the cell, in order to simultaneously address conflicting objectives of energy efficiency KPI maximization (via cell shutdown) and UE SLA guarantees (in terms of coverage hole minimization and call drop KPI minimization). FIG. 1 assumes ES activation/cell shutdown is configured from the O-RAN Service Management and Orchestration framework (SMO), deploying the O-RAN Non-RT RIC NF with the Energy Savings rApp, to the NG-RAN O-CU-CP E2 node function via the O1 interface. As the E2 node is processing this configuration management command for ES activation via cell shutdown from the SMO, the E2 node configuration process breakpoint event (as previously defined and described above) is triggered based on the enhancements to the *E2SM-RC Event Trigger Definition Format 6* IE as part of the RIC SUBSCRIPTION REQUEST E2AP message (defined in O-RAN WG3 E2AP). In addition, based on our enhancements to the *RIC Action Definition IE Format 4* IE (as previously defined and described above) as part of the RIC SUBSCRIPTION REQUEST E2AP message, the E2 node is instructed to request the Near-RT RIC for UE-level traffic steering handover control request for individual UEs within the group of UEs, identified by having a 5QI 1 VoNR bearer - this is facilitated by the enhancements to *RIC Action Definition IE Format* 4 IE previously described above.

Following this, the E2 node shall request the Near-RT RIC for UE-specific handover for the group of UEs with 5QI 1 along with relevant UE-specific and RAN contextual information, as facilitated by our enhancements to the *E2SM-RC Indication Message Format 6* IE previously described above. Upon receiving this request and processing the desired control decision for optimizing traffic steering functionality for those UEs, the Near-RT RIC shall send a control action recommending the UE-specific target cell for the individual UEs in the group of UEs identified by 5QI 1 VoNR bearer, as facilitated by the previously described enhancements to *E2SM-RC Control Message Format 2* IE. Following this, the E2 node informs the Near-RT RIC about the outcome of the desired control action for the individual UEs within the group of UEs, as facilitated by the previously described enhancements to *E2SM-RC Control Outcome Format 2* IE.

The steps summarily illustrated in FIG. 1 are described in further detail below:
1. PM, trace, CM and/or FM data are transmitted via O1 interface from O-RAN NFs (e.g., O-CU-CP 1006 or O-DU 1007) to SMO 1001 containing Non-RT RIC 1002 (which in turn contain ES rApp 1003).
2. ES activation (cell shutdown) command is transmitted via O1 interface from the SMO 1001 containing Non-RT RIC 1002 (which in turn contain ES rApp 1003) to the O-CU-CP 1006.
3. O-CU-CP 1006 sends to Near-RT RIC 1004 (which contains TS xApp 1005) the event trigger and E2 indication, along with details of (information regarding) cells to be ES-activated (shutdown).
4. The Near-RT RIC 1004 sends E2 CONTROL message to O-CU-CP 1006 to handover 5QI 1/QCI 1 UEs to optimal per-UE target cells to avoid call drop (comply with SLA assurance). In response, O-CU-CP 1006 sends E2 CONTROL ACK message back to the Near-RT RIC 1004.
5. O-CU-CP 1006 sends HO message to O-DU 1007 for per-UE handover (UE Context Modification). In response, O-CU-CP 1006 receives UE Context Modification ACK message from O-DU 1007.
6. O-CU-CP 1006 sends ES activation message (i.e., FlAP CU-CP Configuration Update) to O-DU 1007 for cell deactivation (shutdown). In response, O-CU-CP 1006 receives ACK message from O-DU 1007.
7. O-CU-CP 1006 sends notification to SMO 1001 about ES activation (cell deactivation) via O1-CM notification.

The techniques described herein are exemplary and should not be construed as implying any limitation on the present disclosure. Various alternatives, combinations and modifications could be devised by those skilled in the art. For example, although the present disclosure has been described in the context of O-RAN Near-RT RIC Network Function and O-RAN O-CU-CP, the present disclosure is equally applicable to any wireless system that supports an E2 interface. In addition, operations associated with the processes described herein can be performed in any order, unless otherwise specified or dictated by the operations themselves. The present disclosure is intended to embrace all such alternatives, modifications and variances that fall within the scope of the appended claims.

The terms "comprises" or "comprising" are to be interpreted as specifying the presence of the stated features, integers, operations or components, but not precluding the presence of one or more other features, integers, operations or components or groups thereof. The terms "a" and "an" are indefinite articles, and as such, do not preclude embodiments having pluralities of articles.

For the sake of completeness, the following list of acronyms is provided:

### Acronyms

ARFCN: Absolute Radio-Frequency Channel Number
CM: Configuration Management
ACK: Acknowledgement
FLAP: F1 Application Protocol
FM: Fault Management
gNB CU: Next Generation Node B Centralized Unit
HO: Handover
KPI: Key performance indicator
QoS: Quality of Service
QCI: QoS Class identifier
SQI: 5G QoS identifier
VoNR: Voice over New Radio
URLLC: Ultra-reliable Low-Latency Communication
DRB: Data Radio Bearer
eMBB: Enhanced Mobile Broadband
O-RAN: Open Radio Access Network
O-RAN WG3: O-RAN Alliance Workgroup 3
NG-RAN: Next Generation Radio Access Network
O-CU-CP: O-RAN Centralized Unit Control Plane
O-DU: O-RAN Distributed Unit
RAN: Radio Access Network
RIC: RAN Intelligent Controller
IE: Information Element
TB: Transport Block
PM: Performance Measurement
RRC: Radio Resource Control
Near-RT RIC: Near-Real Time RAN Intelligent Controller
Non-RT RIC NF: Non- Real Time RAN Intelligent Controller Network Function
SST: Slice/Service Type
SD: Slice Differentiator
ES rApp: Energy Saving RIC Application
UE: User Equipment

## Claims

1. A method of implementing an optimal handover of a user equipment (UE) in an Open Radio Access Network (O-RAN) system from a first serving cell subject to a shutdown to an optimal target cell for the UE before executing the shutdown, comprising:
providing an event trigger style for an event trigger used to trigger an event in an E2 node of the O-RAN system when a configuration change is ongoing within the E2 node, wherein the event trigger style is provided as radio intelligent controller (RIC) Event Trigger Definition information element (IE) Style Type 5;
sending the event trigger from the E2 node to a near-real time (near-RT) RIC; and
sending, by the near-RT RIC, a control message to the E2 node to implement the optimal handover of the UE to the optimal target cell for the UE.

2. The method of claim 1, further comprising:
providing, by the E2 node of the O-RAN system, at least one of performance measurement data, trace data, and configuration management data to a non-real time (non-RT) RIC; and
sending, by the non-RT RIC to the E2 node of the O-RAN system, a cell shutdown message containing information regarding the first serving cell to be shut down.

3. The method according to claim 2, wherein:
the E2 node comprises at least an O-RAN centralized unit control plane (O-CU-CP), and the E2 node sends the event trigger to the near-RT RIC in response to the cell shutdown message sent by the non-RT RIC.

4. The method according to claim 3, further comprising:
sending, by the near-RT RIC to the E2 node, an E2 CONTROL message to handover the UE from the first serving cell to the optimal target cell; and
sending, by the E2 node to the near-RT RIC, an E2 CONTROL acknowledgement (ACK) message in response to the E2 CONTROL message.

5. The method according to claim 4, further comprising:
sending, by the O-CU-CP to an O-RAN distributed unit (O-DU), a handover message for handover of the UE to the optimal target cell; and
sending, by the O-DU to the O-CU-CP, a UE Context Modification acknowledgement (ACK) message.

6. The method according to claim 5, further comprising:
sending, by the O-CU-CP to the O-DU, a CU-CP Configuration Update message for cell shutdown of the first serving cell.

7. The method according to claim 1, wherein:
RIC Event Trigger Definition IE Style type 5 is used to detect a configuration process in the E2 node based on a specific configuration process type identifier and a configuration process breakpoint identifier associated with the configuration.

8. The method according to claim 2, wherein:
RIC Event Trigger Definition IE Style type 5 is used to detect a configuration process in the E2 node based on a specific configuration process type identifier and a configuration process breakpoint identifier associated with the configuration.

9. The method according to claim 7, wherein:
the configuration process type identifier comprises an identifier for E2 node cell state update process type; and
the configuration process breakpoint identifier comprises at least one of i) an identifier for cell shutdown within the E2 node, and ii) an identifier for cell resumption within the E2 node.

10. The method according to claim 8, wherein:
the configuration process type identifier comprises an identifier for E2 node cell state update process type; and
the configuration process breakpoint identifier comprises at least one of i) an identifier for cell shutdown within the E2 node, and ii) an identifier for cell resumption within the E2 node.

11. The method according to claim 7, further comprising:
providing an E2 Service Model for RAN Control (E2SM-RC) Event Trigger Definition Format 6 to reflect the configuration process breakpoint represented by the configuration process breakpoint identifier.

12. The method according to claim 7, further comprising:
providing a RIC Action Definition information element (IE) Format 4, wherein: i) a UE Group Definition IE, and ii) a RAN Parameters for Context Information IE are included in the RIC Action Definition IE Format 4.

13. The method according to claim 7, further comprising:
providing an E2 Service Model for RAN Control (E2SM-RC) Indication Message Format 6 information element (IE), wherein; i) a UE Identifier associated with the UE subject to the handover to the optimal target cell, and ii) network contextual information for the UE are included in the E2SM-RC Indication Message Format 6 IE.

14. The method according to claim 7, further comprising:
providing an E2 Service Model for RAN Control (E2SM-RC) Control Message Format 2 information element (IE), wherein a UE Identifier associated with the UE subject to the handover to the optimal target cell is included in the E2SM-RC Control Message Format 2 IE.

15. The method according to claim 7, further comprising:
i) providing an E2 Service Model for RAN Control (E2SM-RC) Control Outcome Format 2 information element (IE), wherein a UE Identifier associated with the UE subject to the handover to the optimal target cell is included in the E2SM-RC Control Outcome Format 2 IE; and/or
ii) providing RAN Function Definition for EVENT TRIGGER Definition information element (IE) for enabling the E2 node to specify its capability of handling E2 node configuration process breakpoint-related events, wherein the RAN Function Definition for EVENT TRIGGER Definition IE includes at least one of the following information fields: i) Sequence of E2 Node Configuration Process Types; ii) Sequence of Configuration Process Breakpoints; and iii) Sequence of Associated RAN Parameters.
